(19) Europäisches Patentamt
European Patent Office
Office européen des brevets

(11) **EP 2 249 459 B1**

(12) **EUROPÄISCHE PATENTSCHRIFT**

(45) Veröffentlichungstag und Bekanntmachung des Hinweises auf die Patenterteilung:
**18.06.2014** Patentblatt **2014/25**

(51) Int Cl.:
*H02J 9/06* (2006.01)     *H02J 9/02* (2006.01)
*H05B 33/08* (2006.01)

(21) Anmeldenummer: **10168831.5**

(22) Anmeldetag: **19.01.2007**

(54) **Spannungsversorgung für eine Steuereinheit eines Notlichtgeräts**

Voltage supply for a control unit of an emergency lighting circuit

Tension d'alimentation pour une unité de commande d'un circuit d'éclairage de secours

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.04.2006 DE 102006018531**
**03.07.2006 DE 102006030655**

(43) Veröffentlichungstag der Anmeldung:
**10.11.2010** Patentblatt **2010/45**

(62) Dokumentnummer(n) der früheren Anmeldung(en) nach Art. 76 EPÜ:
**07702902.3 / 2 011 212**

(73) Patentinhaber: Tridonic GmbH & Co KG
6851 Dornbirn (AT)

(72) Erfinder:
• **Stevens, Frederick**
**Spennymoor, Durham DL16 7LE (GB)**
• **Azabani, Saman**
**Spennymoor, Durham DL16 6TE (GB)**
• **Rohner, Daniel**
**1220, Wien (AT)**
• **Mair, Alexander**
**1220, Wien (AT)**

(74) Vertreter: **Rupp, Christian**
**Mitscherlich PartmbB**
**Patent- und Rechtsanwälte**
**Sonnenstraße 33**
**80331 München (DE)**

(56) Entgegenhaltungen:
**EP-A1- 1 202 428     US-B1- 6 502 044**

• **MARCOS ALONSO J ET AL: "A Microcontroller-Based Emergency Ballast for Fluorescent Lamps" IEEE TRANSACTIONS ON INDUSTRIAL ELECTRONICS, IEEE SERVICE CENTER, PISCATAWAY, NJ, USA, Bd. 44, Nr. 2, 1. April 1997 (1997-04-01), XP011023247 ISSN: 0278-0046**

**Beschreibung**

**Die vorliegende Erfindung bezieht sich auf Schaltungen zum Betrieb von Leuchtdioden.**

Aus dem Stand der Technik ist zum Beispiel bekannt, dass die Patentanmeldung US6502044 B1 eine Schaltung zu Selbstdiagnosezwecken von Notlichteinheiten offenbart, die eine Batterie umfasst, um einer Lampe im Notfallbetrieb zu versorgen. Des Weiteren beschreibt die oben genannte Anmeldung auch einen Mikroprozessor, der zu Selbsttest und Diagnosezwecken eingesetzt wird.

Das IEEE Dokument von Alonso et al. "A Microcontroller-Based Emergency Ballast for Fluorescent Lamps" beschreibt eine Lampenansteuerung, die u.a. ein Batterieladegerät, ein Lampenvorschaltgerät für eine Leuchtstofflampe sowie einen Mikrokontroller umfasst. Ziel dieses "Papers" ist ein Schaltungsdesign vorzustellen, welches Leistungsvermögen und Beständigkeit mit möglichst kleinen Abmaßen und geringem Gewicht sicherstellt. Die Spannungsversorgung des Mikrokontrollers ist jedoch unabhängig von der Spannungsversorgung der Notfallbeleuchtung ausgelegt.

EP1202428 A1 beschreibt eine Notfallbeleuchtungseinheit, die eine Batterie umfasst, um eine Lampe im Notfallbetrieb zu versorgen. Bei der Lampe handelt es sich in erster Linie um eine Gasentladungslampe. Der Versorgungsstrom der von der Batterie geliefert wird, wird durch nicht monolithischen Kontrollschaltung konstant gehalten.

Auch wenn in der vorliegenden Beschreibung die Erfindung bezugnehmend auf Notlichtgeräte mit LEDs beschrieben werden wird, so ist zu verstehen, dass sich die Erfindung ganz allgemein auf LED-Betriebsschaltungen bezieht.

Notlichtgeräte weisen dementsprechend als zentrales Element eine Energiespeichereinheit, insbesondere eine Batterie bzw. einen Akkumulator auf, welche während eines Normal- bzw. Ladebetriebs durch die allgemeine Netzversorgungsspannung aufgeladen wird. Hierzu ist eine Ladeschaltung vorgesehen, welche eingangsseitig mit der Netzversorgungsspannung verbunden ist und während des Ladebetriebs der Energiespeichereinheit permanent Energie zuführt, welche diese speichert. Erst im Falle des Auftretens eines Notzustands, der von derartigen Geräten durch eine Überwachung der Netzversorgungsspannung üblicherweise selbständig erkannt wird, wird in einen Notlichtbetrieb gewechselt, in dem die Lichtquelle aktiviert und betrieben-wird, wozu - sofern erforderlich - die von der Energiespeichereinheit zur Verfügung gestellte Energie genutzt wird. Da die Speicherkapazität der Energiespeichereinheit selbstverständlich begrenzt ist, werden vorzugsweise Lichtquellen eingesetzt, welche verhältnismäßig wenig Energie verbrauchen. Dementsprechend werden derartige Notlichtgeräte bevorzugt mit Gasentladungslampen, insbesondere Leuchtstoffröhren ausgestattet. Zunehmend finden allerdings auch Lichtquellen in Form von lichtemittierenden Halbleitern, insbesondere LEDs Verwendung, da auch diese Lichtquellen einen hohen Wirkungsgrad aufweisen und dementsprechend energiesparend eingesetzt werden können.

Der vorliegenden Erfindung liegt nunmehr die Aufgabe zugrunde, eine Schaltung mit verbesserter Spannungsversorgung einer Steuereinheit eines Notlichtgeräts anzugeben.

Ein erster Aspekt der Erfindung bezieht sich auf ein Notlichtgerät, aufweisend:

- eine Batterie,
- eine mit Netzspannung versorgte Ladeschaltung für die Batterie,
- eine Treiberschaltung für eine Lichtquelle in Form eines Schaltreglers mit einem Schalter, der ausgehend von einer digitalen integrierten Steuereinheit angesteuert ist, wobei die Spannungsversorgung der Steuereinheit ausgehend von der Batterie erfolgt,

aufweisend eine von der Steuereinheit unabhängige Batterie-Überwachungsschaltung, die die Steuereinheit abschaltet, wenn die Batteriespannung unter einen vorgegebenen Wert absinkt.

Vorzugsweise wird die Steuereinheit erst wieder aktiviert, wenn die Batteriespannung wieder den vorgegebene Schwellenwert überschreitet.

Das Gerät kann einen DC/DC-Konverter zur Spannungsversorgung der Steuereinheit ausgehend von der Batterie aufweisen.

Das Hochsetzverhältnis des DC/DC-Konverters kann einstellbar ist.

Das Hochsetzverhältnis kann dabei bei absinkender Batteriespannung erhöht werden.

Ein weiterer Aspekt der Erfindung bezieht sich auf ein Notlichtgerät, aufweisend:

- eine Batterie,
- eine mit Netzspannung versorgte Ladeschaltung für die Batterie,
- eine Treiberschaltung für eine Lichtquelle in Form eines Schaltreglers mit einem Schalter, der ausgehend von einer digitalen integrierten Steuereinheit angesteuert ist, aufweisend eine mit der Steuereinheit verbundene Batterie-Überwachungsschaltung,

wobei, wenn die Batteriespannung unter einen vorgegebenen Wert absinkt, alle Schaltungsteile mit Ausnahme der Steuereinheit abgeschaltet werden und die Steuereinheit in einen Stand-by Zustand geht.

Die Steuereinheit kann dabei mit einer digitalen Busschnittstelle versehen sein und im Stand-by Zustand eingehende Digitalsignale überwachen und verarbeiten.

Nachfolgend soll die Erfindung anhand der beiliegenden Zeichnung näher erläutert werden. Es zeigen:

Fig. 1 schematisch das Schaltbild eines ersten Beispiels eines Notlichtgeräts;

Fig. 2 ein zweites Beispiel eines Notlichtgeräts;

Fig. 3 eine Grafik zur Ermittlung der Netzversorgungsspannung auf Basis von an der Ausgangsseite der Ladeschaltung gemessenen Betriebsparametern,

Fig. 4 eine weitere Grafik zur Ermittlung der Sekundärleistung der Ladeschaltung, welche zur indirekten Bestimmung der Lichtquellenleistung berücksichtigt wird,

Fig. 5 eine Illustration einer Batterieschaltung,

Fig. 6 eine LED-Treiberschaltung,

Fig. 7 die Ansteuerung des Treiberschalters sowie den sich ergebenden Diodenstrom, und

Fig. 8 Einzelheiten der Spannungsversorgung eines Mikrocontrollers.

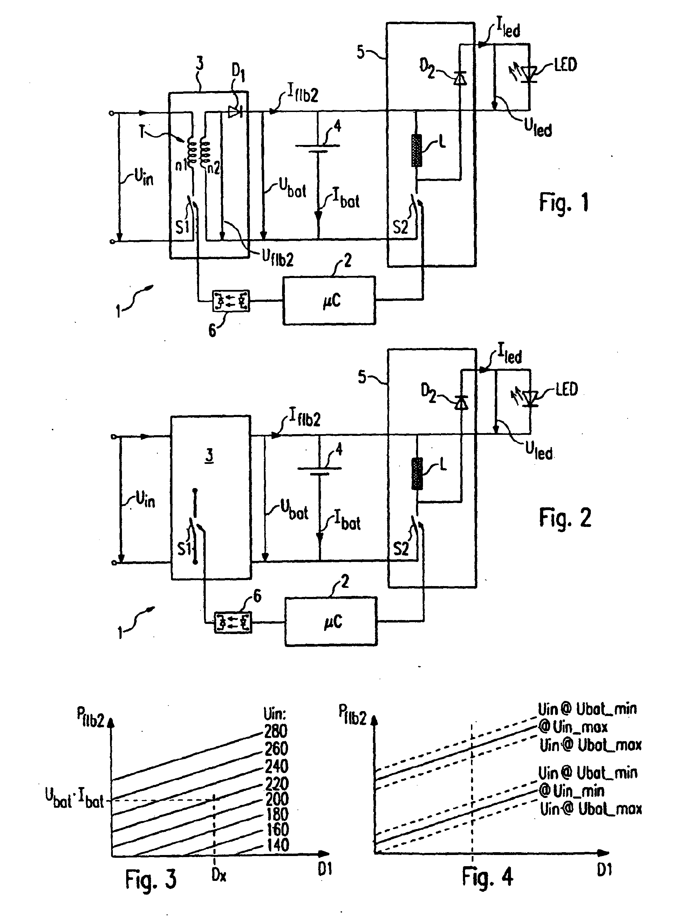

Das in Fig. 1 in vereinfachter Weise dargestellte und allgemein mit dem Bezugszeichen 1 versehene Notlichtgerät ist im dargestellten Beispiel zum Betreiben einer LED als Notlichtquelle vorgesehen. Das Notlichtgerät 1 ist eingangsseitig an ein Stromversorgungsnetz angeschlossen, welches eine Netzversorgungsspannung $U_{in}$ zur Verfügung stellt, und weist als wesentliche Komponenten eine Steuereinheit 2, eine Ladeschaltung 3, eine Energiespeichereinheit 4 in Form einer Batterie bzw. eines Akkumulators sowie eine Treiberschaltung 5 auf.

Die Ladeschaltung 3 ist im dargestellten ersten Beispiel durch einen sog. Flyback-Konverter gebildet, der einerseits einen Transformator T mit einer Primärwicklung n1 und einer Sekundärwicklung n2 sowie andererseits einen steuerbaren Schalter S1 aufweist. In bekannter Weise kann durch ein entsprechendes abwechselndes Öffnen und Schließen des Schalter S1 die von der Netzversorgungsspannung $U_{in}$ zur Verfügung gestellte Energie auf die Sekundärseite des Flyback-Konverters 3 übertragen und zum Aufladen der Energiespeichereinheit 4 genutzt werden. Die Energieübertragung findet dabei im geöffneten Zustand des Schalters S1 statt, wobei hierzu auf der Ausgangsseite des Flyback-Konverters 3 ferner eine Diode $D_1$ vorgesehen ist. Derartige Flyback-Schaltungen finden aufgrund ihres einfachen Aufbaus und ihrer zuverlässigen Funktion in derartigen Notlichtgeräten vielfach Verwendung.

Die Ansteuerung des steuerbaren Schalters S1 erfolgt durch die Steuereinheit 2 des Notlichtgeräts, wobei die Ansteuerung insbesondere galvanisch getrennt über einen Optokoppler 6 erfolgt. Die Steuereinheit 2 steuert hierbei den Schalter S1 alternierend an, wobei sich der sog. Duty-Cycle D1 für den Schaltbetrieb des Schalters S1 wie folgt berechnet:

$$D1 = t_{on1} / (T - t_{on1})$$

$t_{on1}$ entspricht hierbei der Einschaltzeit des Schalters, während T die Gesamtdauer eines vollständigen Schaltzyklus für den Schalter S1 bezeichnet.

Denkbar ist auch, dass es sich bei der Ansteuerung von S1 um einen 'Freischwinger' handelt und über den Duty-cycle vom Optokoppler 6 die Eigenfrequenz des 'Freischwinger' beeinflusst wird.

Während eines Ladebetriebs des Notlichtgeräts 1 ist üblicherweise ausschließlich die Ladeschaltung 3 aktiv, um die Batterie 4 dauerhaft aufzuladen. Erst für den Fall, dass ein Notzustand vorliegt, der insbesondere durch Abweichungen in der Netzversorgungsspannung $U_{in}$ von vorbestimmten Soll-Werten gekennzeichnet ist, wird ein Notlichtbetrieb eingeleitet, in dem die Treiberschaltung 5 dazu genutzt wird, die LED anzusteuern. Die als Schaltregler ausgebildete Treiberschaltung 5 weist hierzu einen weiteren steuerbaren Schalter S2, eine Induktivität L sowie eine Diode $D_2$ auf. Durch alternierendes Ansteuern des Schalters S2 durch die Steuereinheit 2 wird auf diese Weise der LED ein Strom zur Verfügung gestellt, über welchen diese betrieben wird. Das Tastverhältnis, mit dem der Schalter S2 durch die Steuereinheit 2 angesteuert wird, kann dabei variiert werden, um die Höhe des der LED zugeführten Stroms und damit die Leistung, bei welcher die LED betrieben wird, einzustellen. Auf diese Weise kann in sehr eleganter Weise sichergestellt werden, dass auch bei schwankender Batterieleistung die LED trotz allem mit gleichbleibender Helligkeit betrieben wird.

Eine Funktion des Notlichtgeräts 1 besteht also darin, durch Beurteilung der Netzversorgungsspannung $U_{in}$ zu erkennen, ob ein Notzustand vorliegt, um ggf. einen Notlichtbetrieb zu veranlassen. Bislang war es bekannt, hierzu unmittelbar den Wert der Eingangsspannung $U_{in}$ für die Ladeschaltung 3 zu bestimmen, was allerdings aus den zuvor genannten Gründen mit Nachteilen verbunden ist.

Dabei kann auf eine direkte Messung der Netzversorgungsspannung $U_{in}$ verzichtet werden. Stattdessen ist vorgesehen, diese auf indirektem Wege zu ermitteln. Insbesondere ist vorgesehen, das lediglich Größen von Betriebsparametern des Notlichtgeräts 1 auf der Sekundärseite der Ladeschaltung 3 gemessen werden.

Bei dem ersten Beispiel gemäß Fig. 1 wird hierzu die auf der Sekundärseite des Sperrwandlers bzw. Flyback-Konverters 3 anliegende Spannung $U_{flb2}$ gemessen, wozu insbesondere keine galvanische Trennung erforderlich ist, da diese Größe auf dem gleichen Bezugspotential liegt, wie die Steuereinheit 2, welchen den Messwert auswertet. Ist nun die Höhe dieser Sekundärspannung $U_{flb2}$ bekannt, so kann ausgehend hiervon auf die Höhe der Eingangsspannung $U_{in}$ zurückgeschlossen werden. Bei eingeschaltetem Schalter S1 des Flyback-Konverters 3 besteht nämlich ein Zusammenhang zwischen Eingangsspannung $U_{in}$ und Sekundärspannung $U_{flb2}$, der insbesondere von dem Wicklungsverhältnis zwischen den beiden Wicklungen n1 und n2 des Transformators T sowie von dem Duty-Cycle des Schalters D1 abhängig ist. Dieser Zusammenhang zwischen der einfach zu messenden Sekundärspannung $U_{flb2}$ und der zu überwachenden Eingangsspannung $U_{in}$ ist nunmehr in Form einer Wertetabelle in der Steuereinheit 2 hinterlegt, so dass diese nach Messung der Sekundärspannung $U_{flb2}$ in einfacher Weise die Höhe der Eingangsspannung $U_{in}$ bestimmen kann, ohne diese direkt messen zu müssen. Stellt nun die Steuereinheit 2 fest, dass die ermittelte Eingangsspannung $U_{in}$ außerhalb bestimmter Sollwert-Bereiche liegt, so deutet dies auf einen Notzustand hin, was die Steuereinheit 2 wiederum dazu veranlassen wird, einen Notbetrieb einzuleiten.

Die beschriebene Lösung ermöglicht also eine sehr einfache aber effektive Überwachung des Zustands der allgemeinen Stromversorgung. Ferner besteht ein besonderer Vorteil des in Fig. 1 dargestellten Beispiels darin, dass die Höhe der Eingangsspannung $U_{in}$ unabhängig davon bestimmt werden kann, ob die Notlicht-LED eingeschaltet ist oder nicht. Die Diode $D_1$ bewirkt nämlich durch ihre Sperrwirkung eine Trennung zwischen Sekundärspannung $U_{flb2}$ und Batteriespannung $U_{Bat}$, so dass sich die Tätigkeit der Treiberschaltung 3 nicht auf den vorbeschriebenen Vorgang der Bestimmung der Eingangsspannung $U_{in}$ auswirkt.

Ein zweites, etwas allgemeineres Beispiel eines Notlichtgeräts ist in Fig. 2 dargestellt. Dieses entspricht in seinem Aufbau im Wesentlichen dem in Fig. 1 gezeigten Notlichtgerät 1, allerdings ist nunmehr die Ladeschaltung 3 nicht durch einen Flyback-Konverter sondern generell durch eine Schaltungsanordnung gebildet, welche eine Potentialtrennung sowie einen wiederum durch die Steuereinheit 2 angesteuerten Schalter S1 aufweist.

Bei dieser allgemeineren Form besteht nicht zwangläufig ein bekannter Zusammenhang zwischen der Eingangsspannung $U_{in}$ und der Spannung auf der Ausgangsseite der Ladeschaltung 3. Dennoch kann auch hier die Höhe der Eingangsspannung $U_{in}$ auf indirektem Wege bestimmt werden, wobei hierzu nunmehr allerdings andere Betriebsgrößen gemessen werden.

Es handelt sich hierbei einerseits um die Batteriespannung $U_{bat}$ sowie andererseits um den Batteriestrom $I_{bat}$. Beide Größen können wiederum verhältnismäßig einfach, also ohne galvanische Trennung bestimmt werden, da sie wiederum ebenso wie die Steuereinheit 2, welche diese Messgrößen auswertet, auf dem gleichen Bezugspotential liegen.

Auf Basis dieser beiden Messgrößen $U_{bat}$ und $I_{bat}$ sowie des bekannten Duty-Cycles D1 für den Schalter S1 der Ladeschaltung 3 kann dann die Eingangsspannung $U_{in}$ bestimmt werden, da diese mit den drei bekannten Größen in einer Beziehung steht. Dies verdeutlicht die Grafik von Fig. 3, welche unterschiedliche Kennlinien der Sekundärleistung $P_{flb2}$ der Ladeschaltung 3 in Abhängigkeit von dem Duty-Cycle D1 für den Schalter S1 zeigt. Diese Kennlinien werden beispielsweise bei der Herstellung des Notlichtgeräts ermittelt und wiederum in Form einer Tabelle in der Steuereinheit 2 hinterlegt. Es ist erkennbar, dass diese Kennlinien insbesondere auch von der Eingangsspannung $U_{in}$ abhängig sind. Sind nunmehr also der Duty-Cycle D1 sowie die Sekundärleistung $P_{flb2}$ der Ladeschaltung 3 bekannt, so kann ebenso wie bei dem Beispiel von Fig. 1 auf die Höhe der Eingangsspannung $U_{in}$ zurück geschlossen werden.

Im dargestellten Beispiel von Fig. 3 wird also ermittelt, mit welcher Kennlinie die bekannte Kombination aus Duty-Cycle D1 und Sekundärleistung $P_{flb2}$ der Ladeschaltung 3, welche bei deaktivierter Treiberschaltung 5 dem Produkt aus Batteriespannung $U_{bat}$ und Batteriestrom $I_{bat}$ entspricht, übereinstimmt. Bei den dargestellten Messwerten beispielsweise liegt dieser Wert auf der Kennlinie für eine Eingangsspannung $U_{in}$ von 220 Volt, was einem ordnungsgemäßen Zustand der allgemeinen Netzversorgung entspricht. Würde allerdings der ermittelte Wert auf einer Kennlinie liegen, die beispielsweise einer Eingangsspannung $U_{in}$ von 140 Volt oder 280 Volt entspricht, so würde dies die Steuereinheit 2 wiederum dahingehend interpretieren, dass ein Fehler in der Netzversorgung vorliegt und dementsprechend einen Notzustand einleiten.

In beiden gezeigten Beispielen kann also zuverlässig und ohne das Erfordernis einer direkten Messung der Eingangsspannung $U_{in}$ festgestellt werden, ob die Netzversorgung in Ordnung ist oder nicht. Eine Einschränkung bei dem Beispiel von Fig. 2 besteht allerdings darin, dass die beschriebene Bestimmung der Eingangsspannung $U_{in}$ nur im ausgeschalteten Zustand der

Treiberschaltung 5 möglich ist. Bei dem Beispiel von Fig. 1 hingegen besteht diese Einschränkung - wie bereits erwähnt - nicht. Grundsätzlich allerdings wird die Steuereinheit 2 im Falle des Erkennens eines Fehlers eine Aktivierung der Treiberschaltung 5 und dementsprechend ein Einschalten der LED veranlassen.

Nach Aktivieren der Treiberschaltung 5 kann dann in der zuvor beschriebenen Weise der Schalter S2 hochfrequent angesteuert werden, um die LED mit einer gewünschten Leistung zu betreiben. Um in diesem Fall sicherzustellen, dass die Leistung der LED konstant ist, wäre es erforderlich, sowohl die LED-Spannung $U_{led}$ als auch den LED-Strom $I_{led}$ zu kennen, um eine Regelung zu ermöglichen.

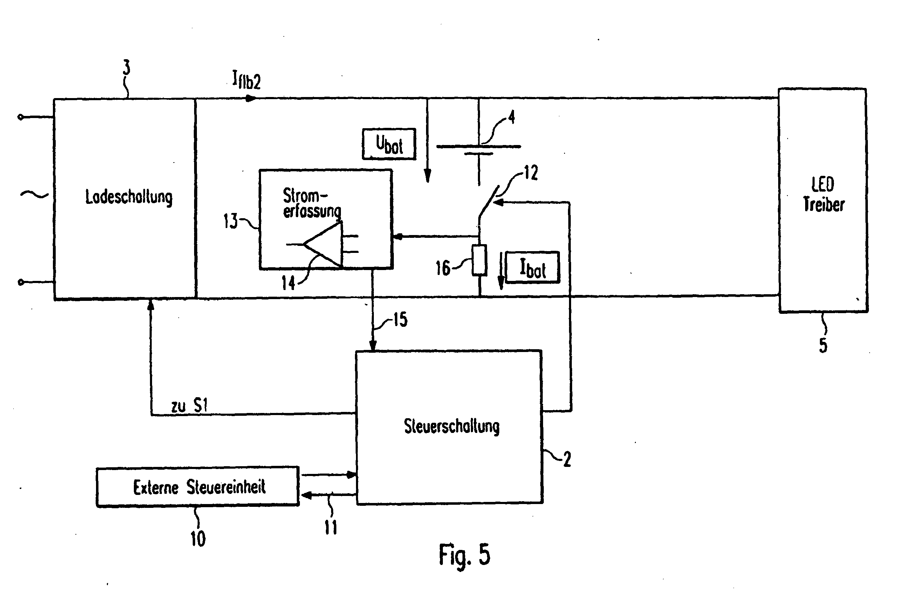

Bezug nehmend auf Figur 5 sollen nunmehr Einzelheiten der Verschaltung der Batterie 4 erläutert werden.

Wie in Figur 5 ersichtlich, ist seriell zu der Batterie 4 ein Element 12 verschaltet, dass die Funktion eines Linearreglers und/oder eines Schalters aufweisen kann. Beispielsweise kann dieses Element 12 ein Transistor sein. Seriell zu der Batterie 4 ist weiterhin ein Messwiderstand (Shunt) 16 geschaltet, so dass der Spannungsabfall an dem Shunt 16 repräsentativ für den Batteriestrom ist.

Das an dem Shunt 16 abgegriffene Messsignal wird einer Stromerfassungseinheit 13 zugeführt, die vorzugsweise als diskrete Schaltung aufgebaut ist und einen Komparator 14 aufweisen kann. Der Komparator 14 ist nur ein Beispiel dafür, wie ein Offset auf das Messsignal vom Shunt 16 beaufschlagt werden kann. Die Beaufschlagung des Offsets dient dazu, in vereinfachter Weise den Batteriestrom wiedergebende Signale mit unterschiedlichen Polaritäten auswerten zu können, in dem der Offset so gewählt ist, dass die Signalpegel so verschoben werden, dass beide Signalpolaritäten nunmehr die gleiche Polarität und dafür unterschiedliche Amplituden aufweisen. Somit lässt sich in verhältnismäßig einfacher Weise beispielsweise durch die Steuerschaltung 2 sowohl der Batterieladestrom wie auch der Batterieentladestrom messen, die bekanntlich unterschiedliche Polaritäten haben. Der Steuerschaltung 2 wird also somit bevorzugt ein Messsignal 15 mit einheitlicher Polarität zugeführt.

Wenn der Transistor 12 als Linearregler ausgebildet ist, kann mittels der Stromerfassungseinheit 13 und Ansteuerung des Linearreglers 12 eine Regelung des Batterieentladestroms und/oder Batterieladestroms auf einen vorgegebenen Sollwert ausgeführt werden. In vereinfachter Weise kann diese Regelung natürlich auch als Schutzschaltung ausgeführt werden, so dass bei einem allzu hohen Batterieladestrom oder Batterieentladestrom der Schalter 12 geöffnet wird, um die Batterie 4 zu schonen.

Bei sehr langem Ausfall der Netzspannung kann eine Tiefentladung der Batterie 4 auftreten. Wenn die Batterie 4 tiefentladen ist, weist sie eine Spannung von beispielsweise 1,3 Volt auf, die also unter der zulässigen Spannung von beispielsweise 1,5 Volt liegt. Selbst wenn nunmehr eine ordnungsgemäße Netzspannung eingangsseitig an der Ladeschaltung 3 anliegt, und die Ladeschaltung 3 in der oben beschriebenen Weise ordnungsgemäß betrieben wird, wird die tiefentladene Batterie 4 die Sekundärseite der Ladeschaltung auf den einen unzulässig niedrigen Wert ziehen.

Erfindungsgemäß kann diese Tiefentladung mittels Erfassung der Spannung der Batterie 4 erfasst werden. Bei Erfassung einer derartigen Tiefentladung wird der Schalter 12 vorzugsweise getaktet betrieben. Dabei wird vorzugsweise der Schalter 12 nur für eine verhältnismäßig kurzen Zeitraum geschlossen, wobei in diesem kurzen Zeitraum ein Ladevorgang der Batterie 4 erfolgt. Danach wird indessen der Schalter 12 wieder auf einen längeren Zeitraum geöffnet, so dass die Batterie 4 von der Sekundärseite der Ladeschaltung 3 abgetrennt ist und die Ladeschaltung 3 sekundärseitig wieder die ordnungsgemäße Spannung von beispielsweise 1,5 Volt bereitstellen kann. Somit liegt sekundärseitig während eines weit größeren Zeitraums ein ordnungsgemäßes Spannungsverhältnis vor.

Es liegt somit eine impulsförmige Ladung der tiefentladenen Batterie vor.

Während der Schalter 12 geöffnet ist, versorgt die eine wieder anliegende Netzspannung mittels der Ladeschaltung korrekt die angeschlossene LED-Treiberschaltung und LEDs. Bei kurzzeitig geschlossenem Schalter dagegen wird die Batterie schonend wieder aufgeladen. Beispielsweise kann das Tastverhältnis für den Schalter 12 derart gewählt sein, dass er nur während 10% der Gesamtzeitdauer geschlossen ist und entsprechend 90% geöffnet, so dass sich die Batterie in diesen 90% Zeitdauer erholen kann.

Bei erfasster Tiefentladung der Batterie mittels der Erfassung der Batteriespannung kann automatisch in diesem gepulsten Betrieb des Schalters 12 umgeschaltet werden. Vorzugsweise erfolgt die Überwachung der Batteriespannung über eine diskrete Schaltung und somit unabhängig vom Mikrocontroller 2 (siehe Figuren 1, 2), der ja womöglich bei zu niedriger Batteriespannung nicht voll funktionsfähig ist.

Im übrigen ist aus diesem Grund auch bevorzugt die Stromerfassungsschaltung 13 mit dem Komparator 14 als diskrete Schaltung und somit unabhängig vom Mikrocontroller 2 und dessen ordnungsgemäßem Betrieb gewählt.

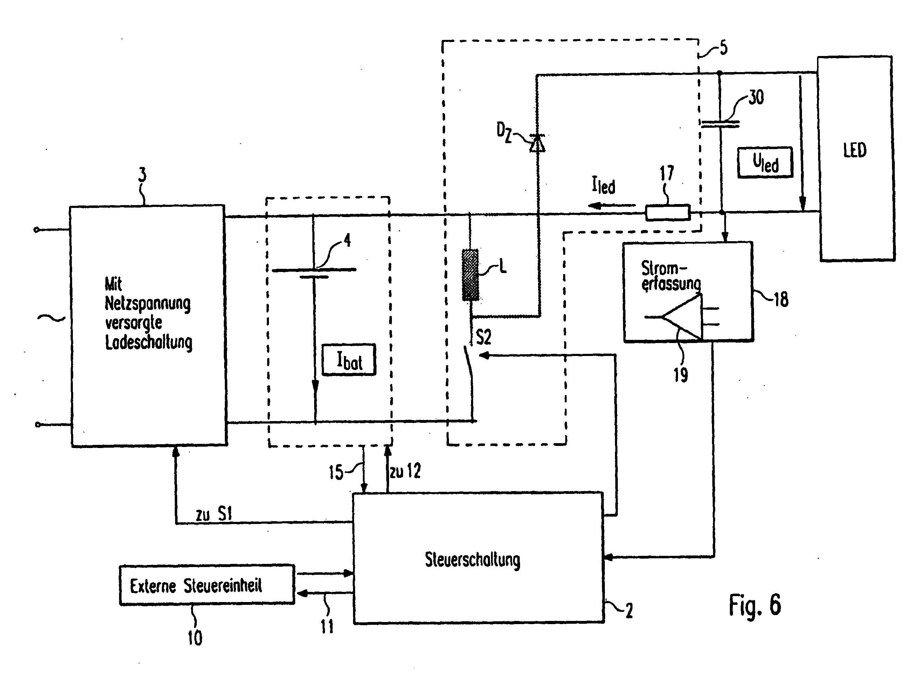

Figur 6 zeigt weitere Einzelheiten zur einer LED-Treiberschaltung 5. Sämtliche Merkmale der Batterieschaltung von Figur 5 lassen sich im übrigen mit der Schaltung von Figur 6 kombinieren.

Das Grundprinzip der Treiberschaltung 5 ist, wie bereits eingangs beschrieben, ein Schaltregler, bei dem bei geschlossenem Schalter S2 die Spule L aufmagnetisiert wird und sich die magnetische Energie bei wiedergeöffnetem Schalter S2 über einen Strompfad entlädt, der in Serie eine Zenerdiode, wenigstens eine LED sowie einen Ohmschen Widerstand 17 aufweist.

Bekanntlich ist es verhältnismäßig einfach, den Stromfluß durch die Dioden bei geschlossenem Schalter S2 zu messen.

Dagegen ist es etwas komplexer, den Stromfluß durch die LEDs bei geöffnetem Schalter S2 zu messen.

Zur Stromerfassung ist erfindungsgemäß der Widerstand 17 in Serie zu den LEDs geschaltet, wobei dieser Widerstand 17 ein Beispiel für ein Stromerfassungsmittel darstellt.

Eine Stromerfassungseinheit 18 kann beispielsweise einen Komparator 19 aufweisen.

Ein Stromerfassungssignal, d.h. ein den Strom durch die LEDs wiedergebendes Signal wird der Steuerschaltung 2 zugeführt. Die Steuerschaltung 2 kann das Schaltverhalten des Schalters S2 u.a. abhängig von dem Stromerfassungssignal ausgestalten.

Ein Kondensator 30 ist parallel zu der wenigstens einen LED geschaltet. Der Kondensator 30 glättet den LED-Strom, indem er Energie speichert und die Spannung über der wenigstens einen LED im wesentlichen konstant hält. Der Kondensator 30 ist dabei derart bemessen, dass weiterhin die Regelung der LED-Spannung möglich ist.

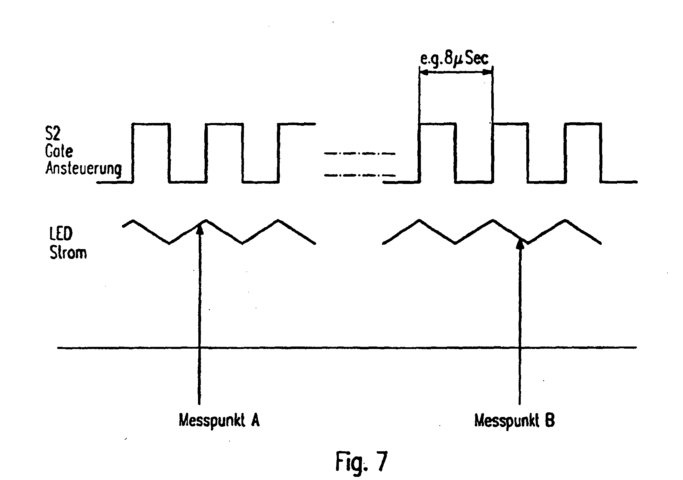

Figur 7 zeigt schematisch die Ansteuerung des Schalters S2, d.h. für den Fall, dass dieser Schalter als FET-Transistor ausgebildet ist, die Ansteuerung des Gate dieses Transistors in der Zusammenschau mit dem sich einstellenden Strom durch die LEDs. Während der Einschaltzeitdauer des Schalters S2 steigt der Strom durch die LEDs jeweils an. Während der Ausschaltzeitdauer sinkt er, getrieben durch die magnetische Energie der Spule L wieder ab. Somit ergibt sich ein um einen festen DC-Wert zickzackförmiger Verlauf des Stroms durch die LED. Die Stromerfassung soll nunmehr insbesondere den zeitlichen Mittelwert dieses Stroms ermitteln können, um somit beispielsweise die Leistung der LEDs entweder auf einen konstanten Wert oder auf einen frei wählbaren Wert (dimming) wählen zu können.

Es ist vorgesehen, dass die Steuerschaltung 2, die das Schaltverhalten des Schalters S2 vorgibt und somit kennt, den Stromwert zu einem ersten Meßpunkt A sowie zu einem zweiten Meßpunkt B ermittelt, um daraus wiederum den Mittelwert zu bilden. Aus dem Mittelwert des Stromwerts zum Meßzeitpunkt A und Meßzeitpunkt B ergibt sich dann der zeitliche Mittelwert des LED-Stroms.

Der Meßpunkt A ist dabei so gewählt, dass er im Bereich des Endes des Einschaltens des Schalters S2 liegt, während der Zeitpunkt B derart gewählt ist, dass er im Bereich des Endes Ausschaltens des Schalters S2 liegt.

Vorzugsweise wird für einen Messzyklus eine Messung mehrerer Minimal- und Maximalwerte ausgeführt. Somit lassen sich Ungenauigkeiten bezüglich des Messzeitpunkts herausmitteln. Für dieses Messprinzip sind die Messzeitpunkte mit der Taktung des Schalters S2 synchronisiert. Indessen kann es bei dieser Synchronisierung zu Ungenauigkeiten kommen, die bspw. durch die Verzögerungen von A/D-Wandlern begründet werden. Diese Ungenauigkeiten werden durch die Erfassung mehrere Werte herausgemittelt.

Somit lässt sich also der zeitliche Mittelwert des Stroms durch die LED erfassen, und die Steuereinheit 2 kann abhängig davon die Schaltfrequenz und/oder das Tastverhältnis des Schalters S2 einstellen. Zum Dimmen der LED kann die Steuereinheit 2 beispielsweise der hochfrequenten Taktung des Schalters S2 eine im Vergleich dazu niederfrequente Modulation beispielsweise in Form einer PWM-Modulation überlagern. Dies stellt eine alternative oder zusätzliche Möglichkeit zur Dimmung dar, da wie oben ausgeführt das Dimmen auch durch Änderung der hochfrequenten Taktung des Schalters S2 selbst erfolgen kann.

Indessen kann das Dimmen der LED, d.h. die Einstellung des LED-Stroms auf einen definierten einwählbaren Wert, auch abhängig von anderen Größen erfolgen. Beispielsweise kann das Dimmen abhängig von einem erfassten Batterieentladestrom (siehe Schaltung von Figur 5) erfolgen, um somit die Batterielebenszeit zu verlängern.

Die Treiberschaltung 5 kann die LED auch dimmen, wenn der Mittelwert der Netzspannung, die die Ladeschaltung 3 versorgt, unter einen vorgegebenen Wert absinkt. Als weitere assistierende Maßnahme zur Verlängerung der Batterielebensdauer kann der Flyback-Konverter in der Ladeschaltung 3 in einen gepulsten Betrieb versetzt werden, so dass also der Flyback-Konverter assistierend zu der schwächer werdenden Batteriespannung die Treiberschaltung 5 versorgt.

Um eine Entladung der Batteriespannung zur Batterie 4 zu erfassen, kann die Batteriespannung erfasst werden (siehe wiederum Figur 5).

Weiterhin kann zusätzlich zu der LED-Stromerfassung eine LED-Spannungserfassung erfolgen.

Es kann eine Softstart-Funktion vorgesehen sein, bei der die Steuerschaltung 2 bei Inbetriebnahme zuerst einen verhältnismäßig geringen Teststrom durch die LED(s) fliessen lässt. Die Testmessung soll elektrische Parameter ermitteln, um herauszufinden, ob eine bzw. welche LED an die Treiberschaltung 5 angeschlossen ist. Beispielsweise kann ermittelt werden, welche LED-Spannung sich bei dem vorgegebenen Teststrom ergibt. Daraus können Rückschlüsse auf die Art (Farbe) und Anzahl der angeschlossenen LEDs getroffen werden, um wiederum abhängig davon den stationären Betriebsstrom angepasst an die ermittelten LED-Type zu regeln.

Grundsätzlich kann vorgesehen sein, dass die Steuereinheit 2 bei Inbetriebnahme den LED-Strom durch entsprechende Ansteuerung des Schalters S2 der Treiberschaltung 5 ausgehend von einem niedrigen Wert hin zu dem stationären Betriebswert für den LED-Strom erhöht.

Wenn das Anlegen des Teststroms das Fehlen oder einen Störfall einer LED ergibt, können automatisch in vorgegebenen Abständen eine Wiederholung des Anlegens der Testspannung erfolgen, bis das Einsetzen einer ordnungsgemäßen LED erfasst wird.

Wenn das Anlegen der Testspannung das Fehlen oder einen Störfall einer LED ergibt, können automatisch in vorgegebenen Abständen eine Wiederholung des Anlegens der Testspannung erfolgen, bis das Einsetzen einer ordnungsgemäßen LED erfasst wird.

Wie gesagt kann der Strom durch die LED entweder durch Überlagerung einer niederfrequenten Modulation zu der hochfrequenten Taktung des Schalters S2 und/oder durch eine Veränderung (Tastverhältnis, Frequenz) der hochfrequenten Taktung selbst erfolgen.

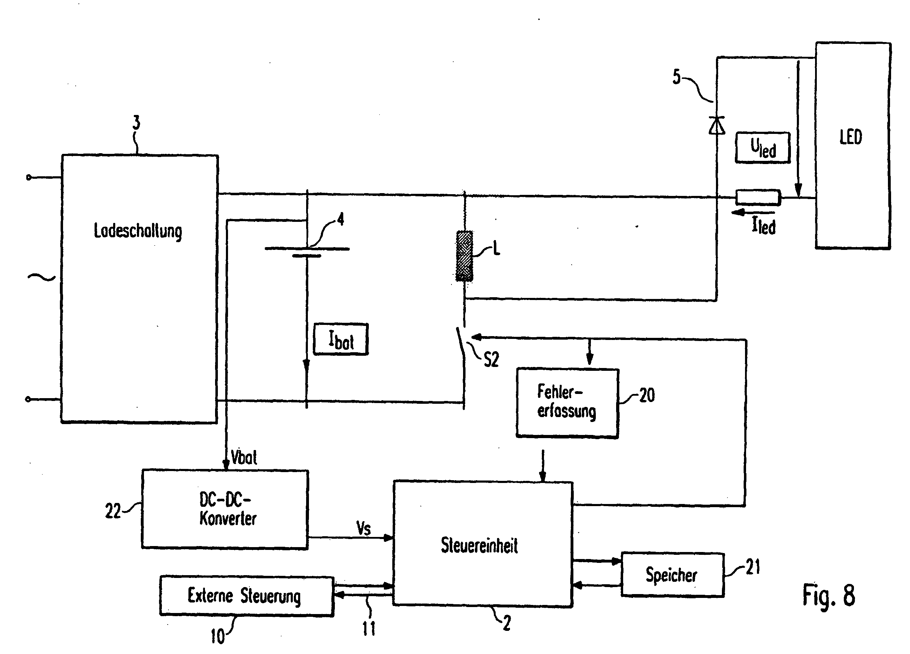

Bezug nehmend auf Figur 8 sollen nunmehr Aspekte der Erfindung bezüglich der Spannungsversorgung $V_s$ und der korrekten Funktion der Steuereinheit 2 erläutert werden, die bekanntlich als digitale integrierte Schaltung, insbesondere eine Software-gesteuerte Schaltung wie beispielsweise ein Mikrocontroller ausgebildet sein kann. Bei nicht ordnungsgemäßer Funktion des Mikrocontrollers 2 kann es passieren, dass der Mikrocontroller 2 den Schalter S2 der LED-Treiberschaltung 5 dauerhaft in den geschlossenen (leitenden) Zustand schaltet.

Es ist nunmehr eine diskrete Fehlererfassungsschaltung 20 vorgesehen, die diesen Zustand erfasst. Beispielsweise kann diese diskrete Fehlererfassungsschaltung 20 einen Kondensator aufweisen, der das Gate-Ansteuersignal des Schalters S2 integriert und somit den Zustand des dauerhaften Einschaltens des LED-Treiberschalters S2 erfasst. Bei dauerhaftem Anliegen des Einschaltsignals (logisch hoch) steigt also die Spannung an dem Kondensator der Fehlererfassungsschaltung 20 an, die sich bei einem logischen 'niedrigen' Signal beispielsweise über einen ohmschen Widerstand entladen könnte. Die Fehlererfassungsschaltung 20 ist mit dem Mikrocontroller 2 verbunden, d.h. bei dauerhaft anliegendem Einschaltsignal an dem LED-Treiberschaltung S2 baut sich an dem Kondensator der Fehlererfassungsschaltung 20 ein Signal auf, das zu einem dafür vorgesehenen Pin des Mikrocontrollers 2 geführt wird. Bei Anliegen dieses Signals an dem Pin des Mikrocontrollers 2 ist vorgesehen, dass die aktuellen Betriebsdaten des Mikrocontrollers 2 in einen Speicher 21 abgelegt werden. Danach führt der Mikrocontroller 2 einen Neustart nach einem Reset aus.

Ein vergleichbarer Vorgang kann ausgelöst werden, wenn eine Erfassungsschaltung für die Batteriespannung 4 ermittelt, dass die Versorgungsspannung des Mikrocontrollers 2 beispielsweise deutlich unter dem Sollwert von 1,5 Volt absinkt. Auch in diesem Fall werden die Betriebsdaten von dem Mikrocontroller 2 in dem Speicher 21 abgelegt. Ein Neustart des Mikrocontrollers 2 erfolgt natürlich erst dann wieder, wenn eine ausreichende Versorgungsspannung für den Mikrocontroller 2 erfasst wurde.

Gemäß einem weiteren Aspekt der Erfindung wird die Versorgungsspannung Vs für den Mikrocontroller 2 mittels eines Schaltnetzteils (DC/DC-Konverter) 22 bereit gestellt. Der DC/DC-Konverter 22 kann in Form eines sogenannten Hochsetzstellers (Buck/Boost-Konverter) derart ausgestaltet sein, dass bei geringer Batteriespannung (beispielsweise im Falle einer Tiefentladung) das Hochsetzverhältnis erhöht wird und somit weiterhin eine ausreichende Versorgungsspannung für den Mikrocontroller 2 bereit gestellt wird.

Gemäß einem weiteren Aspekt der Erfindung veranlasst der Mikrocontroller 2, wenn nach einem längeren Ausfall der Netzversorgungsspannung dann auch die Batteriespannung absinkt, das Abschalten sämtlicher Schaltungsteile, die nicht rein zur Versorgung des Mikrocontrollers 2 notwendig sind. Der Mikrocontroller 2 versetzt sich in einen Standby-Zustand. In diesem Standby-Zustand ist weiterhin die Schnittstelle des Mikrocontrollers 2 funktionell, die insbesondere eingehende Bussignale von der Busleitung 11 und somit von einer externen Steuereinheit 10 überwacht. Somit kann der Mikrocontroller 2 auch in diesem Standby-Zustand ein eingehendes Digitalsignal (bspw. DALI-Signal) oder vergleichbare Signale verarbeiten.

Im übrigen kann auch der Operationsverstärker 14 der Stromregelung 13 der Batterie 4 bei sehr schwacher Batterie deaktiviert werden kann.

**Patentansprüche**

1.   LED-Betriebsschaltung (1), aufweisend:

- Eine digitale integrierte Steuereinheit (2),
- eine Batterie (4),
- eine mit Netzspannung versorgte Ladeschaltung (3) für die Batterie (4),
- eine durch die Batterie (4) versorgte Treiberschaltung (5) zum Betreiben einer Lichtquelle, wobei die Treiberschaltung (5) in Form eines Schaltreglers mit einem Schalter (S2) ausgebildet ist, der ausgehend von der Steuereinheit (2) angesteuert ist, **dadurch gekennzeichnet, dass** die Spannungsversorgung (22) der Steuereinheit (2) ausgehend von der Batterie (4) erfolgt,
aufweisend eine von der Steuereinheit (2) unabhängige Batterie-Überwachungsschaltung, die die Steuereinheit (2) abschaltet, wenn die Batteriespannung unter einen vorgegebenen Schwellenwert absinkt.

2.   LED-Betriebsschaltung nach Anspruch 1, wobei die LED-Betriebsschaltung so ausgestaltet ist, dass vor dem Abschalten der Steuereinheit (2) Betriebsdaten von der Steuereinheit (2) in einen Speicher (21) gesichert werden.

3.   LED-Betriebsschaltung nach Anspruch 1 oder 2, wobei die LED-Betriebsschaltung so ausgestaltet ist, dass als Bedingung für die Wiederaktivierung der Steuereinheit (2) die Batteriespannung wieder den vorgegebenen Schwellenwert überschreiten muss.

4.   LED-Betriebsschaltung nach einem der vorhergehenden Ansprüche, aufweisend einen DC/DC-Konverter (22) zur Spannungsversorgung der Steuereinheit (2) ausgehend von der Batterie (4).

5.   LED-Betriebsschaltung nach Anspruch 4, bei dem das Hochsetzverhältnis des DC/DC-Konverters einstellbar und ggf. auf einen konstanten Ausgangswert eingestellt ist.

6.   LED-Betriebsschaltung nach Anspruch 5, bei dem das Hochsetzverhältnis bei absinkender Batteriespannung erhöht wird.

7.   LED-Betriebsschaltung (1), aufweisend:

- Eine digitale integrierte Steuereinheit (2),
- eine Batterie (4),

- eine mit Netzspannung versorgte Ladeschaltung (3) für die Batterie (4),
- eine durch die Batterie (4) versorgte Treiberschaltung (5) zum Betreiben einer Lichtquelle, wobei die Treiberschaltung (5) in Form eines Schaltreglers mit einem Schalter (S2) ausgebildet ist, der ausgehend von der Steuereinheit (2) angesteuert ist, **dadurch gekennzeichnet, dass** eine Batterie-Überwachungsschaltung mit der Steuereinheit (2) verbundenen ist, wobei, wenn die Batteriespannung unter einen vorgegebenen Schwellenwert absinkt, die Steuereinheit (2) alle Schaltungsteile abschaltet und die Steuereinheit (2) in einen Stand-by Zustand geht.

8. LED-Betriebsschaltung nach Anspruch 7, wobei die Steuereinheit (2) mit einer digitalen Busschnittstelle (11) versehen ist und im Stand-by Zustand eingehende Digitalsignale überwacht und verarbeitet.

9. LED-Betriebsschaltung nach einem der vorigen Ansprüche, wobei die Treiberschaltung (5) eine LED-Treiberschaltung ist bzw. die Lichtquelle durch eine oder mehrere LEDs gebildet ist.

10. Verfahren zum Betrieb einer LED-Betriebsschaltung (1), aufweisend:

    - Eine digitale integrierte Steuereinheit (2),
    - eine Batterie (4),
    - eine mit Netzspannung versorgte Ladeschaltung (3) für die Batterie (4),
    - eine durch die Batterie (4) versorgte Treiberschaltung (5) zum Betreiben einer Lichtquelle, wobei die Treiberschaltung (5) in Form eines Schaltreglers mit einem Schalter (S2) ausgebildet ist, der ausgehend von der Steuereinheit (2) angesteuert wird, **dadurch gekennzeichnet, dass** die Spannungsversorgung der Steuereinheit (2) ausgehend von der Batterie (4) erfolgt und die Steuereinheit (2) abgeschaltet wird, wenn die Batteriespannung unter einen vorgegebenen Schwellenwert absinkt.

11. Verfahren nach Anspruch 10, wobei vor dem Abschalten der Steuereinheit (2) Betriebsdaten von der Steuereinheit (2) in einen Speicher (21) gesichert werden.

12. Verfahren Anspruch 10 oder 11, bei dem die Steuereinheit (2) erst wieder aktiviert wird, wenn die Batteriespannung wieder den vorgegebene Schwellenwert überschreitet.

13. Verfahren zum Betrieb einer LED-Betriebsschaltung (1), aufweisend:

- Eine digitale integrierte Steuereinheit (2),
- eine Batterie (4),
- eine mit Netzspannung versorgte Ladeschaltung (3) für die Batterie (4),
- eine durch die Batterie (4) versorgte Treiberschaltung (5) zum Betreiben einer Lichtquelle, wobei die Treiberschaltung (5) in Form eines Schaltreglers mit einem Schalter (S2) ausgebildet ist, der ausgehend von einer digitalen integrierten Steuereinheit (2) angesteuert ist, **dadurch gekennzeichnet, dass** eine Batterie-Überwachungsschaltung mit der Steuereinheit (2) verbundenen ist, wobei, wenn die Batteriespannung unter einen vorgegebenen Schwellenwert absinkt, alle Schaltungsteile mit Ausnahme der Steuereinheit (2) abgeschaltet werden und die Steuereinheit (2) in einen Stand-by Zustand geht.

14. Verfahren nach Anspruch 13, wobei die Steuereinheit (2) mit einer digitalen Busschnittstelle (11) versehen ist und im Stand-by Zustand eingehende Digitalsignale überwacht und verarbeitet.

15. Verfahren nach einem der Ansprüche 10 bis 14, wobei die Treiberschaltung (5) eine LED-Treiberschaltung ist bzw. die Lichtquelle durch eine oder mehrere LEDs gebildet ist.

## Claims

1. LED operating circuit (1), having:

   - a digital integrated control unit (2),
   - a battery (4),
   - a charging circuit (3) supplied with system voltage for the battery (4),
   - a driver circuit (5) supplied by the battery (4) for operating a light source, the driver circuit (5) being in the form of a switched-mode regulator with a switch (S2), which is driven starting from the control unit (2), **characterized in that** the voltage supply (22) to the control unit (2) takes place starting from the battery (4), having a battery monitoring circuit, which is independent of the control unit (2) and disconnects the control unit (2) when the battery voltage falls below a predetermined threshold value.

2. LED operating circuit according to Claim 1, wherein the LED operating circuit is configured in such a way that operational data of the control unit (2) are saved in a storage device (21) prior to the disconnection of the control unit (2).

**3.** LED operating circuit according to Claim 1 or 2, wherein the LED operating circuit is designed in such a way that, as a condition for the reactivation of the control unit (2), the battery voltage needs to exceed the predetermined threshold value again.

**4.** LED operating circuit according to one of the preceding claims, having a DC-to-DC converter (22) for supplying voltage to the control unit (2) starting from the battery (4).

**5.** LED operating circuit according to Claim 4, in which the step-up ratio of the DC-to-DC converter is settable and is possibly set to a constant output value.

**6.** LED operating circuit according to Claim 5, in which the step-up ratio is increased as the battery voltage decreases.

**7.** LED operating circuit (1), having:

- a digital integrated control unit (2),
- a battery (4),
- a charging circuit (3) supplied with system voltage for the battery (4),
- a driver circuit (5) supplied by the battery (4) for operating a light source, the driver circuit (5) being in the form of a switched-mode regulator with a switch (S2), which is driven starting from the control unit (2), **characterized in that** a battery monitoring circuit is connected to the control unit (2), wherein, when the battery voltage falls below a predetermined threshold value, the control unit (2) disconnects all of the circuit parts and the control unit (2) transfers to a standby state.

**8.** LED operating circuit according to Claim 7, wherein the control unit (2) is provided with a digital bus interface (11) and, in the standby state, monitors and processes incoming digital signals.

**9.** LED operating circuit according to one of the preceding claims, wherein the driver circuit (5) is an LED driver circuit or the light source is formed by one or more LEDs.

**10.** Method for operating an LED operating circuit (1), having:

- a digital integrated control unit (2),
- a battery (4),
- a charging circuit (3) supplied with system voltage for the battery (4),
- a driver circuit (5) supplied by the battery (4) for operating a light source, the driver circuit (5) being in the form of a switched-mode regulator with a switch (S2), which is driven starting from the control unit (2), **characterized in that** the voltage supply to the control unit (2) takes place starting from the battery (4), and the control unit (2) is disconnected when the battery voltage falls below a predetermined threshold value.

**11.** Method according to Claim 1, wherein operational data of the control unit (2) are saved in a storage device (21) prior to the disconnection of the control unit (2).

**12.** Method according to Claim 1 or 11, in which the control unit (2) is only reactivated when the battery voltage exceeds the predetermined threshold value again.

**13.** Method for operating an LED operating circuit (1), having:

- a digital integrated control unit (2),
- a battery (4),
- a charging circuit (3) supplied with system voltage for the battery (4),
- a driver circuit (5) supplied by the battery (4) for operating a light source, the driver circuit (5) being in the form of a switched-mode regulator with a switch (S2), which is driven starting from control unit (2), **characterized in that** a battery monitoring circuit is connected to the control unit (2),

wherein, when the battery voltage falls below a predetermined threshold value, all of the circuit parts with the exception of the control unit (2) are disconnected and the control unit (2) transfers to a standby state.

**14.** Method according to Claim 13, wherein the control unit (2) is provided with a digital bus interface (11) and, in the standby state, monitors and processes incoming digital signals.

**15.** Method according to one of Claims 10 to 14, wherein the driver circuit (5) is an LED driver circuit or the light source is formed by one or more LEDs.

**Revendications**

**1.** Circuit d'alimentation pour LED (1), présentant :

- une unité de commande intégrée numérique (2),
- un accumulateur (4),
- un circuit de charge (3), alimenté par une tension de réseau, pour l'accumulateur (4),
- un circuit de commande (5) alimenté par l'accumulateur (4) pour faire fonctionner une source lumineuse, le circuit de commande (5) étant configuré sous la forme d'un régulateur à découpage avec un commutateur (S2), qui est commandé à partir de l'unité de commande (2), **caractérisé en ce que** l'alimentation en tension (22) de l'unité de commande (2) est effectuée à partir de l'accumulateur (4), présentant un circuit de contrôle d'accumulateur indépendant de l'unité de commande (2), lequel circuit de contrôle d'accumulateur met hors circuit l'unité de commande (2) lorsque la tension de l'accumulateur descend en-dessous d'une valeur de seuil prédéterminée.

2. Circuit d'alimentation pour LED selon la revendication 1, le circuit d'alimentation pour LED étant agencé de sorte que, avant la mise hors circuit de l'unité de commande, des données de fonctionnement de l'unité de commande (2) sont sauvegardées dans un dispositif de stockage (21).

3. Circuit d'alimentation pour LED selon la revendication 1 ou 2, le circuit d'alimentation pour LED étant agencé de sorte que, comme condition pour la réactivation de l'unité de commande (2), la tension de l'accumulateur doit à nouveau dépasser la valeur de seuil prédéterminée.

4. Circuit d'alimentation pour LED selon l'une des revendications précédentes, présentant un convertisseur continu-continu (22) pour l'alimentation en tension de l'unité de commande (2) à partir de l'accumulateur (4).

5. Circuit d'alimentation pour LED selon la revendication 4, dans lequel le rapport d'amplification du convertisseur continu-continu est ajustable et, le cas échéant, est ajusté à une valeur de sortie constante.

6. Circuit d'alimentation pour LED selon la revendication 5, dans lequel le rapport d'amplification est augmenté lorsque la tension de l'accumulateur baisse.

7. Circuit d'alimentation pour LED (1), présentant :

   - une unité de commande intégrée numérique (2),
   - un accumulateur (4),
   - un circuit de charge (3), alimenté par une tension de réseau, pour l'accumulateur (4),
   - un circuit de commande (5) alimenté par l'accumulateur (4) pour faire fonctionner une source lumineuse, le circuit de commande (5) étant configuré sous la forme d'un régulateur à découpage avec un commutateur (S2), qui est commandé à partir de l'unité de commande (2), **caractérisé en ce qu'**un circuit de contrôle d'accumulateur est relié à l'unité de commande (2), dans lequel, lorsque la tension de l'accumulateur descend sous une valeur de seuil prédéterminée, l'unité de commande (2) met hors circuit tous les composants du circuit et l'unité de commande (2) passe en état de veille.

8. Circuit d'alimentation pour LED selon la revendication 7, dans lequel l'unité de commande (2) est pourvue d'une interface de bus numérique (11) et, dans l'état de veille, contrôle des signaux numériques entrant et les traite.

9. Circuit d'alimentation pour LED selon l'une des revendications précédentes, dans lequel le circuit de commande (5) est un circuit de commande pour LED ou la source lumineuse est formée par une ou plusieurs LEDs.

10. Procédé pour le fonctionnement d'un circuit d'alimentation pour LED (1), présentant :

    - une unité de commande intégrée numérique (2),
    - un accumulateur (4),
    - un circuit de charge (3), alimenté par une tension de réseau, pour l'accumulateur (4),
    - un circuit de commande (5) alimenté par l'accumulateur (4) pour faire fonctionner une source lumineuse, le circuit de commande (5) étant configuré sous la forme d'un régulateur à découpage avec un commutateur (S2), qui est commandé à partir de l'unité de commande (2), **caractérisé en ce que** l'alimentation en tension de l'unité de commande (2) est effectuée à partir de l'accumulateur (4) et l'unité de commande (2) est mise hors circuit lorsque la tension de l'accumulateur descend sous une valeur de seuil prédéterminée.

11. Procédé selon la revendication 10, dans lequel, avant la mise hors circuit de l'unité de commande (2), des données de fonctionnement de l'unité de commande (2) sont sauvegardées dans un dispositif de stockage (21).

12. Procédé selon la revendication 10 ou 11, dans lequel l'unité de commande (2) est seulement réactivée lorsque la tension de l'accumulateur dépasse à nouveau la valeur de seuil prédéterminée.

13. Procédé pour le fonctionnement d'un circuit d'alimentation pour LED (1), présentant :

- une unité de commande intégrée numérique (2),
- un accumulateur (4),
- un circuit de charge (3), alimenté par une tension de réseau, pour l'accumulateur (4),
- un circuit de commande (5) alimenté par l'accumulateur (4) pour faire fonctionner une source lumineuse, le circuit de commande (5) étant configuré sous la forme d'un régulateur à découpage avec un commutateur (S2), qui est commandé à partir de l'unité de commande intégrée numérique (2),

**caractérisé en ce qu'**un circuit de contrôle d'accumulateur est relié à l'unité de commande (2), dans lequel, lorsque la tension de l'accumulateur descend sous une valeur de seuil prédéterminée, tous les composants du circuit à l'exception de l'unité de commande (2) sont mis hors circuit et l'unité de commande (2) passe en état de veille.

**14.** Procédé selon la revendication 13,
dans lequel l'unité de commande (2) est pourvue d'une interface de bus numérique (11) et, dans l'état de veille, contrôle des signaux numériques entrant et les traite.

**15.** Procédé selon l'une des revendications 10 à 14,
dans lequel le circuit de commande (5) est un circuit de commande pour LED ou la source lumineuse est formée par une ou plusieurs LEDs.

Fig. 1

Fig. 2

Fig. 3

Fig. 4

Fig. 5

Fig. 6

EP 2 249 459 B1

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6502044 B1

- EP 1202428 A1

**In der Beschreibung aufgeführte Nicht-Patentliteratur**

- **ALONSO et al.** A Microcontroller-Based Emergency Ballast for Fluorescent Lamps. *IEEE*